# EUROPEAN PATENT APPLICATION

(11) **EP 1 739 103 A1**
(43) Date of publication of application: **03.01.2007**
(21) Application number: 05254117.4
(22) Date of filing: 30.06.2005
(51) Int. Cl.: C08F 10/00, C08F 4/64, C07F 7/02, C07F 17/00

(54) **Catalyst**

(71) Applicant: Borealis Technology Oy, 06101 Porvoo (FI)
(72) Inventor: Helaja, Tuulamari, 00740 Helsinki (FI); Nicolas, Ronan, 20810, Turku (FI); Rautio, Soile, 06450 Porvoo (FI); Maaranen, Janne, 04260 Kerava (FI); Kokk, esa, 01520 Vantaa (FI)
(74) Representative: Campbell, Neil Boyd

(57) **Abstract**

A metallocene procatalyst compound of formula (I) 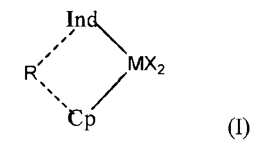 (wherein Ind represents a multi-ring η⁵-ligand substituted by a siloxy group; Cp is a substituted or unsubstituted cyclopentadienyl group;
M is a group 3 to 7 transition metal;
X is a sigma ligand; and
R is an optionally present bridge between the Ind and Cp ligands.

## Description

This invention relates to catalysts for olefin polymerisation, in particular to unsymmetrical catalyst compounds containing metals complexed by siloxy substituted ligands, and their use in olefin polymerisation.

In olefin polymerization, it has long been known to use as a catalyst system the combination of a metallocene procatalyst and a co-catalyst, e.g. an aluminoxane cocatalyst.

More recently, chemists have appreciated the potential benefits in employing siloxy substitution on metallocenes. For example, WO01/53362 describes various monosubstituted siloxy derivatives which have surprising activity when used in combination with non aluminoxane cocatalysts.

WO03/000744 describes indenyl metallocenes substituted in the 4, 5, 6 or 7 position by siloxy substituents. Indenyl metallocenes monosiloxysubstitued in the 2-position are described in WO97/28170. WO03/010208 describes metallocenes monosubstituted by siloxy groups containing an olefinic residue.

The chemist is however constantly searching for new metallocenes which will give rise to polymers of desirable properties, e.g. high molecular weight. We have now surprisingly found that unsymmetrical metallocenes in which the metal is complexed by a siloxy substituted multi-ring η⁵-ligand give rise to polymers with high molecular weight both in unsupported and supported form. Such catalysts also exhibit high activities.

Thus, viewed from one aspect the invention provides a metallocene procatalyst compound of formula (I) 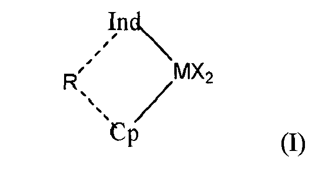 (wherein Ind represents a multi-ring η⁵-ligand substituted by a siloxy group;
Cp is a substituted or unsubstituted cyclopentadienyl group;
M is a group 3 to 7 transition metal;
X is a sigma ligand; and
R is an optionally present bridge between the Ind and Cp ligands.

Viewed from a further aspect the invention provides an olefin polymerisation catalyst system comprising (i) a metallocene procatalyst compound as hereinbefore described and (ii) a co-catalyst.

Viewed from a still further aspect the invention provides a process for olefin polymerisation comprising polymerising an olefin in the presence of olefin polymerisation catalyst system as hereinbefore described.

Viewed from a further aspect the invention provides the use of a metallocene procatalyst compound as hereinbefore defined in olefin polymerization, especially ethylene or propylene, more especially ethylene, polymerisation or copolymerisation.

Viewed from a yet further aspect the invention provides an olefin polymer produced by a polymerisation catalysed by an olefin polymerisation catalyst system as hereinbefore described.

The procatalyst of use in the invention is preferably of formula (II) 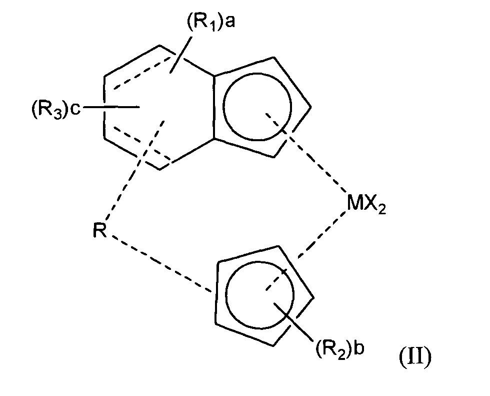 wherein M, X and R are as hereinbefore defined;
each R₁, which may be the same or different, is a ring substituent which does not form a bond to a metal M or two R₁ groups present on adjacent carbon atoms on the five membered ring can be taken together to form a further optionally substituted ring;
each R₂, which may be the same or different, is a ring substituent which does not form a bond to a metal M;
each R₃, which may be the same or different, is a siloxy group;
a is an integer from 0 to 6,
b is an integer from 0 to 5; and
c is an integer from 1 to 7 the total of a and c not exceeding 7.

The substituents R₁ and R₃ can be present on either or both rings in the multi-ring ligand. It has been surprisingly found that the presence of a siloxy group on the multi-ring ligand in combination with a cyclopentadienyl ligand allows the formation of polymers having particularly high molecular weights and high activities. Such catalysts have not been proposed before. Conventional metallocenes are typically symmetrical (and are therefore optically active) and the use of asymmetrical metallocenes is rare.

The siloxy group in the procatalyst of formula (I) or designated R₃ in formula (II) is preferably of formula OSi(R₄)₃ wherein each R₄, which may be the same or different, is a C₁₋₁₆ hydrocarbyl group, preferably a C₁₋₁₂ hydrocarbyl group, e.g. a C₁₋₈ alkyl group, C₂₋₈ alkenyl group, C₆₋₁₀-aryl group or C₇₋₁₂-aralkyl group. Especially preferred R₄ groups include C₁₋₆ alkyl such as a methyl, ethyl, isopropyl, or tertbutyl, C₂₋₈-alkenyl groups such as n-octenyl, C₆₋₁₀-aryl groups such as phenyl or C₇₋₁₂-aralkyl groups such as benzyl.

Examples of suitable siloxy groups in the metallocene procatalysts of the invention therefore include dimethyltertbutylsiloxy, triisopropylsiloxy, triethylsiloxy, tertbutyldiphenylsiloxy, dimethyloctenylsiloxy, dimethylisopropylsiloxy and trimethylsiloxy. An especially preferred siloxy substituent is dimethyltertbutylsiloxy or tertbutyldiphenylsiloxy.

The substituent c is preferably 1 to 4, especially 1 or 2. Siloxy substituents may be present on any available position on the multi-ring ligand. Preferably however, siloxy groups are present at the 1-position, 4-position or 7-position of the ring. When two siloxy groups are present, preferred substitution patterns include 1,4 and 1,7-substitution.

The dotted lines present in the 6-membered ring of formula (II) represent the optional presence of a double bond, i.e. allowing the formation of an indenyl or tetrahydroindenyl species. Preferably, double bonds are present in the 6-membered ring.

Various bridges (R) have been proposed in the art and will be known to the skilled chemist. Suitable bridges may comprise 1 to 3 atom backbones comprising for example, carbon or silicon. Preferred bridges between the two ligands include ethylene and dimethylsilyl bridges. Bridges based on Si-Si units are also well known. If present, the bridging between ligands should preferably be between the 1 - positions on the rings. It is preferred however if no bridge is present in the procatalysts of the invention.

It will be appreciated that where a bridge between the two ligands is present, then the values of a, b and c must be adjusted to allow for the presence of the bridge. Thus, the maximum value of c and (a+c) will become 6, the maximum value of a will become 5 and maximum value of b becomes 4.

The group 3 to 7 metal in the procatalyst of the invention may be coordinated by two sigma ligands X as is known in the art. Such ligands may be hydrogen atoms, C₁₋₁₂ hydrocarbyl groups (such as C₁₋₁₂ alkyl, C₂₋₁₂alkenyl, C₆₋₁₀aryl groups or C₇₋₁₂aralkyl groups) optionally substituted by fluorine and/or aryl (e.g. phenyl) groups), by silane groups (e.g, triC₁₋₁₆-alkylsilyl), by halogen atoms (e.g. chlorine), by amine (eg NMe₂) or by other sigma-ligands known for use in metallocene (pro)catalysts.

Preferably, the sigma ligand is a halogen (especially chlorine), C₁₋₁₂₋alkyl (especially methyl), benzyl, amino (especially NMe₂) or trialkylsilyl (especially trimethylsilyl). Moreover, it is preferred if all sigma ligands present are identical.

The metal M is preferably a group 4 to 6 transition metal, e.g. a metal selected from Ti, Zr, Hf, V, Nb, Ta, Cr, Mo and W. However the metal is preferably Cr, Ti, Zr or Hf, particularly Ti, Zr or Hf.

The subscript a is preferably 0, 1 or 2, especially 0 i.e. the multi-ring ligand preferably carries no further substituents other than the siloxy groups present. Two R₁ groups on adjacent carbon atoms on the five membered ring may be taken together to form a further ring, e.g. a 5 or preferably 6-membered ring, thus forming a fluorenyl or octahydrofluorenyl ring. Such a ring can be unsubstituted or substituted by a group or groups R₂.

If present, each R₁ group may be an alkyl, aryl, aralkyl, silyl or alkoxy group. R₁ is preferably a C₁₋₈ hydrocarbyl group, such as a C₁₋₈-alkyl, e.g. a methyl, ethyl, isopropyl or tertbutyl group, or a C₆₋₁₀-aryl group such as phenyl or the R₁ group may be a triC₁₋₈-alkylsilyl group, e.g. trimethylsilyl or dimethyltertbutylsilyl.

If present, R₁ substituents are preferably present on the 2-position of the ring.

The subscript b is preferably 0, 1 or 2 especially 0, i.e. the cyclopentadienyl ring is preferably unsubstituted. R₂, if present, may be an alkyl, aryl, aralkyl, silyl, siloxy or alkoxy group. R₂ preferably represents a C₁₋₈ hydrocarbyl group, such as a C₁₋₈-alkyl, e.g. a methyl, ethyl, isopropyl or tertbutyl group, or a C₆₋₁₀-aryl group such as phenyl, or R₂ may represent a triC₁₋₈-alkylsilyl group, e.g. trimethylsilyl or dimethyltertbutylsilyl group or may be a siloxy group as hereinbefore defined with respect to the multi-ring ligand, i.e. of formula R₃. Thus, the procatalyst of the invention may carry siloxy substituents on both rings.

Preferred cyclopentadienyl ligands of use in this invention include pentamethylcyclopentadienyl, trimethylcyclopentadienyl, dimethylcyclopentadienyl and methylcyclopentadieny as well as unsubstituted cyclopentadienyl.

Especially preferred procatalysts of the invention are therefore of formula (III) 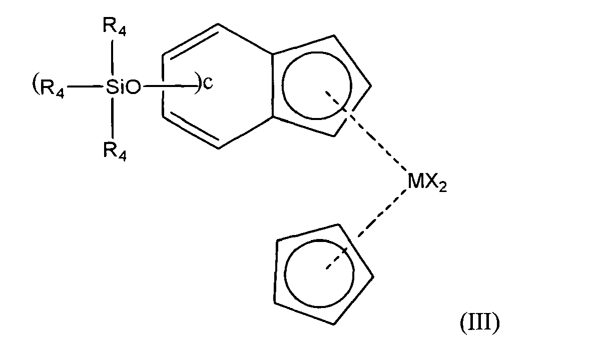 (wherein R₄, c, M and X are as hereinbefore defined, the siloxy group being available for bonding to any ring atom). Specific indenyl ligands of interest in the invention include 1,7-bis(tertbutyldimethylsiloxy)indenyl, 1,4-bis(tertbutyldimethylsiloxy)indenyl, 1-tertbutyldimethylsiloxy)indenyl, 4-bis(tertbutyldimethylsiloxy)indenyl, 1,7-bis(tertbutyldiphenylsiloxy)indenyl, 1,4-bis(tertbutyldiphenylsiloxy)indenyl, 1-tertbutyldiphenylsiloxy)indenyl, and 4-bis(tertbutyldiphenylsiloxy)indenyl.

The siloxy ligands used according to the invention may be prepared by known reactions as described in, for example, WO03/010208 or WO03/00744. The cyclopentadienyl ligands are also preparable using well known techniques. Conversion of the ligands into the metallocene procatalysts claimed herein can be readily achieved using literature methods.

Thus, a 6 ring substituted siloxy substituted indene compound can be prepared from the corresponding 6 ring hydroxy substituted indanone compound via silylation. The indanone can be converted to an indene via a tosylhydrazone (see scheme 1 below).

Siloxy substituted indenes in general can be deprotonated with a strong base and reacted with, for example, CpMCl₃ to form a metallocene procatalyst.

Bridged siloxy-metallocene procatalysts may be constructed by reacting a deprotonated siloxy-ligand with a bridging agent (eg SiMe₂Cl₂). Bridging can be completed through reaction of a cyclopentadiene anion therewith. Such a ligand can be metallated as is well known in the art, e.g. through reaction of a metal tetrachloride with the deprotonated ligands.

In all complexes, sigma ligands other than chlorine may be introduced by displacement of chlorine from metal chloride by reaction with appropriate nucleophilic reagent (e.g. methyl lithium or methylmagnesium chloride) or using, instead of a metal halide, a reagent such as tetrakisdimethylamidotitanium or metal compounds with mixed chloro and dimethylamido ligands.

The present inventors have however devised a new method for the preparation of siloxy substituted ligands which is simpler than methods previously practised. The inventors have surprisingly found that a cyclic ketone compound can be converted to a siloxy substituted compound in a single reaction step in high yield and with a particularly simple work up procedure.

Thus, viewed from another aspect, the invention provides a process for the preparation of a siloxy substituted compound comprising reacting a compound of formula (IV) 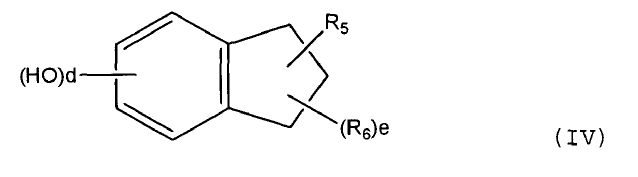 wherein R₅ is an oxo group present in the 5-membered ring, R₆ is a ring substituent, e.g. as defined for R₁ above;
d is 0 to 5,
e is 0 to 6, the total of d and e not exceeding 6, with the proviso that an OH group is not adjacent R₅;
with a non-nucleophilic base and a compound (R₄)₃Si-Y, (wherein R₄ is as hereinbefore defined and Y is a leaving group) in a non-polar solvent;
adding a more polar solvent to the mixture so as to form a two-phase mixture, said more polar solvent being free of active protons;
and isolating the siloxy substituted compound from the non-polar solvent.

The oxo group R₅ can be present on the 1,2 or 3 position of the ring, especially the 1-position. The subscript d is preferably 1 or 2, especially 1. The hydroxy groups are preferably present on the 6-membered ring and should not be alpha to the oxo group. The hydroxy group is preferably present in the 4 or 7 position of the 6 - membered ring (i.e. the positions adjacent the bridgeheads).

The subscript e is preferably 0, 1 or 2 especially 0. When present, R₆ may be as defined above for R₁ (although a further ring cannot be formed by adjacent R₁ groups). R₆ is preferably a C₁₋₈ hydrocarbyl group, such as a C₁₋₈-alkyl, e.g. a methyl, ethyl, isopropyl or tertbutyl group, or a C₆₋₁₀-aryl group such as phenyl or the R₁ group may be a triC₁₋₈-alkylsilyl group, e.g. trimethylsilyl or dimethyltertbutylsilyl. R₆ substituents are preferably present in the 5-membered ring.

Suitable leaving groups Y are well known in chemistry and include tosyl, alkoxy, halo, mesyl etc. The skilled chemist is able to select a suitable leaving group for this reaction.

The non-nucleophilic base can be any well known in the art, e.g. DBU, imidazole or triethylamine. The non-polar solvent is conveniently a hydrocarbon solvent, e.g. an aliphatic solvent, toluene or xylene. Preferred solvents include pentane. The more polar solvent is one which is free of active protons and is capable of dissolving both reactants and reaction products. When suitable amounts of the non polar solvent and more polar solvent are mixed, a two phase liquid -liquid system results. Suitable solvents free of active protons include ethers, acetonitrile, DMF, methyltertbutylether and DMSO, especially ethers such as THF or other ethers of similar polarity.

After the reaction, the pentane fraction is separated and the product extracted therefrom by conventional work up.

The procatalysts of the invention are generally employed in combination with a cocatalyst. A suitable cocatalyst of use in the invention may be an aluminium alkyl compound, e.g. an aluminium trialkyl (eg triethylaluminium (TEA)) or an aluminium dialkyl halide (eg diethyl aluminium chloride (DEAC)), however it is preferably an alumoxane, particularly methylaluminoxane MAO or an isobutylalumoxane, eg TIBAO (tetraisobutylalumoxane) or HIBAO (hexaisobutylalumoxane). Alternatively however certain known boron cocatalysts could be used.

The metallocene procatalyst and cocatalyst may be introduced into the polymerization reactor separately or together or, more preferably they are prereacted and their reaction product is introduced into the polymerization reactor.

If desired the procatalyst, procatalyst/cocatalyst mixture or a procatalyst/cocatalyst reaction product may be used in unsupported form, i.e. metallocene and MAO can be precipitated without an actual carrier material and used as such. This forms a preferred aspect of the present invention. However the metallocene procatalyst or its reaction product with the cocatalyst can be introduced into the polymerization reactor in supported form, e.g. impregnated into a porous particulate support.

The particulate support material used is preferably an organic or inorganic material, e.g. a polymer (such as for example polyethylene, polypropylene, an ethylene-propylene copolymer, another polyolefin or polystyrene or a combination thereof). However, the support is especially preferably a metal or pseudo metal oxide such as silica, alumina or zirconia or a mixed oxide such as silica-alumina, in particular silica, alumina or silica-alumina. Particularly preferably, the support material is acidic, e.g. having an acidity greater than or equal to silica, more preferably greater than or equal to silica-alumina and even more preferably greater than or equal to alumina.

Especially preferably the support is a porous material so that the metallocene may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 µm, more preferably 20 to 80 µm.

Before loading, the particulate support material is preferably calcined, ie heat treated, preferably under a non-reactive gas such as nitrogen. This treatment is preferably at a temperature in excess of 100°C, more preferably 200°C or higher, e.g. 200-800°C, particularly about 300°C. The calcination treatment is preferably effected for several hours, e.g. 2 to 30 hours, more preferably about 10 hours.

The support may be treated with an alkylating agent before being loaded with the metallocene. Treatment with the alkylating agent may be effected using an alkylating agent in a gas or liquid phase, e.g. in an organic solvent for the alkylating agent. The alkylating agent may be any agent capable of introducing alkyl groups, preferably C₁₋₆ alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, etc.

The optionally alkylated support material is loaded with the procatalyst, preferably using a solution of the procatalyst in an organic solvent therefor, e.g. as described in the patent publications referred to above. Preferably, the volume of procatalyst solution used is from 50 to 500% of the pore volume of the carrier, more especially preferably 80 to 120%. The concentration of procatalyst compound in the solution used can vary from dilute to saturated depending on the amount of metallocene active sites that it is desired be loaded into the carrier pores.

The active metal (ie. the metal of the procatalyst) is preferably loaded onto the support material at from 0.1 to 4%, preferably 0.5 to 3.0%, especially 1.0 to 2.0%, by weight metal relative to the dry weight of the support material.

After loading of the procatalyst onto the support material, the loaded support may be recovered for use in olefin polymerization, e.g. by separation of any excess procatalyst solution and if desired drying of the loaded support, optionally at elevated temperatures, e.g. 25 to 80°C.

Alternatively, a cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the procatalyst, for example by including the cocatalyst in the solution of the procatalyst or, by contacting the procatalyst loaded support material with a solution of the cocatalyst or catalyst activator, e.g. a solution in an organic solvent. Alternatively however any such further material may be added to the procatalyst loaded support material in the polymerization reactor or shortly before dosing of the catalyst material into the reactor.

Where an alumoxane cocatalyst is used, then for an unsupported catalyst the aluminium:metallocene metal (M) molar ratio is conveniently 2:1 to 10000:1, preferably 50:1 to 1000:1. Where the catalyst is supported the Al:M molar ratio is conveniently 2:1 to 10000:1 preferably 50:1 to 400:1. Where the further material is loaded onto the procatalyst loaded support material, the support may be recovered and if desired dried before use in olefin polymerization.

The olefin polymerized in the method of the invention is preferably ethylene or ethylene and an alpha-olefin. It is within the scope of the invention to polymerise other alpha olefins alone or mixtures of alpha olefins, for example C2-20 olefins, e.g. ethylene, propene, n-but-1-ene, n-hex-1-ene, 4-methyl-pent-1-ene, n-oct-1-ene- etc. The olefins polymerized in the method of the invention may include any compound which includes unsaturated polymerizable groups. Thus for example unsaturated compounds, such as C6-20 olefins (including cyclic and polycyclic olefins (e.g. norbornene)), and polyenes, especially C6-20 dienes, may be included in a comonomer mixture with lower olefins, e.g. C2-5-olefins. Diolefins (ie. dienes) are suitably used for introducing long chain branching into the resultant polymer. Examples of such dienes include linear dienes such as 1,5-hexadiene, 1,6-heptadiene, 1,8-nonadiene, 1,9-decadiene, etc.

In general, where the polymer being produced is a homopolymer it will preferably be polyethylene or polypropylene. Where the polymer being produced is a copolymer it will likewise preferably be an ethylene or propylene copolymer with ethylene or propylene making up the major proportion (by number and more preferably by weight) of the monomer residues. Comonomers, such as C4-8 1-alkenes, will generally be incorporated to contribute to the mechanical strength of the polymer product. Polyethylene copolymers are of particular interest in the present invention, e.g. ethylene homopolymers, ethylene butene, ethylene hexene, ethylene octene copolymers or ethylene butene hexene terpolymers.

Usually metallocene catalysts yield relatively narrow molecular weight distribution polymers; however, if desired, the nature of the monomer/monomer mixture and the polymerization conditions may be changed during the polymerization process so as to produce a multimodal e.g. bimodal molecular weight distribution (MWD) in the final polymer product. In such a broad MWD product, the higher molecular weight component contributes to the strength of the end product while the lower molecular weight component contributes to the processability of the product, e.g. enabling the product to be used in extrusion and blow moulding processes, for example for the preparation of tubes, pipes, containers, etc.

A multimodal MWD can be produced using a catalyst material with two or more different types of active polymerization sites, e.g. with one such site provided by the metallocene and further sites being provided by further catalysts, e.g. Ziegler catalysts, other metallocenes, etc. included in the catalyst material. Alternatively, multimodality can be provided using a number of polymerisation stages.

Polymerization in the method of the invention may be effected in one or more, e.g. 1, 2 or 3, polymerization stages, e.g. in 1,2 or 3 reactors, using conventional polymerization techniques, e.g. gas phase, solution phase, slurry or bulk polymerization. In general, a combination of slurry (or bulk) and at least one gas phase reactor is often preferred, particularly with the reactor order being slurry (or bulk) then one or more gas phase. A loop reactor - gas phase reactor system has been developed by Borealis and is known as BORSTAR technology.

For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen together with monomer (e.g. ethylene).

For solution phase reactors, the reaction temperature used will generally be in the range 130 to 270°C, the reactor pressure will generally be in the range 20 to 400 bar and the residence time will generally be in the range 0.005 to 1 hour. The solvent used will commonly be a hydrocarbon with a boiling point in the range 80-200'C.

Generally the quantity of catalyst used will depend upon the nature of the catalyst, the reactor types and conditions and the properties desired for the polymer product. Conventional catalyst quantities, such as described in the publications referred to herein, may be used.

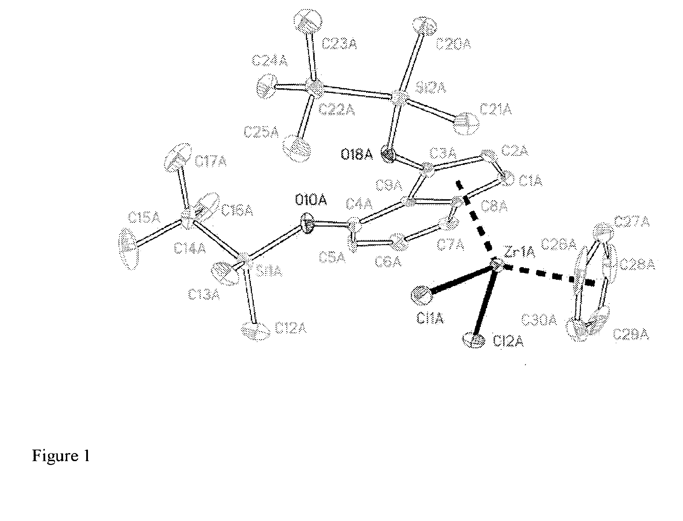

The invention will now be illustrated further by reference to the following non-limiting Examples and Figure. Figure 1 represents a molecular structure obtained from an X-ray diffractogram of the metallocene compound of Example 4-4. The crystal data was collected by the Helsinki University with a Nonius Kappa CCD area-detector diffractometer at 173(2)K, using graphite monochromatized MoKa radiation, 0.71073 A: COLLECT (Nonius, 2002). The crystal was fixed at the fiber using oil-drop method. A multi-scan absorption correction was made: SADABS (Sheldrick, 1996).

### Examples

Density is measured according to ISO 1183

MFR₂₁ is measured according to ISO 1133 at 190°C at load of 21.6 kg.

Size exclusion chromatography (SEC) was used to determine the average molecular weights and molecular weight distributions of the produced polymers. The molecular weight averages and molecular weight distributions were determined using a Waters 150C SEC instrument. A set of two mixed bed and one 10¨7 Å TSK-Gel columns from TosoHaas was used. The analyses were performed in 1,2,4-trichlorobenzene (TCB) stabilised with BHT at 135°C with flow rate 0.7 ml/min. The columns were calibrated with NMWD polystyrene standards and BMWD polyethylenes.

The mass spectra were carried out by Formula Oil and Gas Analytical Research Department using direct inlet MS spectra which were produced by VG TRIO 2 quadrupole mass spectrometer in an electron impact ionisation mode (EIMS) (70eV).

The elemental analyses were carried out by the Analytische Laboratorien GmbH in Lindlar Germany. The C, H, and N analyses at the Analytischen laboratorien were carried out with CHNO-RAPDI Elementar Analysensysteme GmbH according to method C or ASTDM 5291-92. Chlorine determinations were performed by the oxygen flask method DIN 53474. Titanium was determined after destructing the organic matter by wet oxidation using sulphuric and nitric acid. Zirconium was determined by ignition of the sample and weighing the oxide formed.

Melting temperature Tm, crystallization temperature Tcr, and the degree of crystallinity: measure with Mettler Toledo 822 differential scanning calorimetry (DSC) on 3 +0.5 mg samples. Both crystallization and melting curves were obtained during 10°C/min cooling and heating scans between 30°C and 225°C. Melting and crystallization temperatures were taken as the peaks of endotherms and exotherms. The degree of crystallinity was calculated by comparison with heat of fusion of a perfectly crystalline polyethylene.

The comonomer contents of the polymers were measured with Nicolet Magna 550 FTIR. Number of vinyl groups to number of carbons (C"/1000C) was measured by FTIR according to ASTM 3124.

All operations are carried out under argon or nitrogen atmosphere using standard Schlenk and vacuum techniques, if not otherwise specified. Solvents including deuterated solvents were dried with molecular sieves and stored under argon. Commercially obtained chemicals were used as such in the synthesis. NMR spectra were recorded on a JEOL EX 270 spectrometer (1H frequency 270.05 MHz). 4-Hydroxy-1-indanone and CpZrCl₃ are commercially available starting materials.

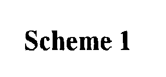

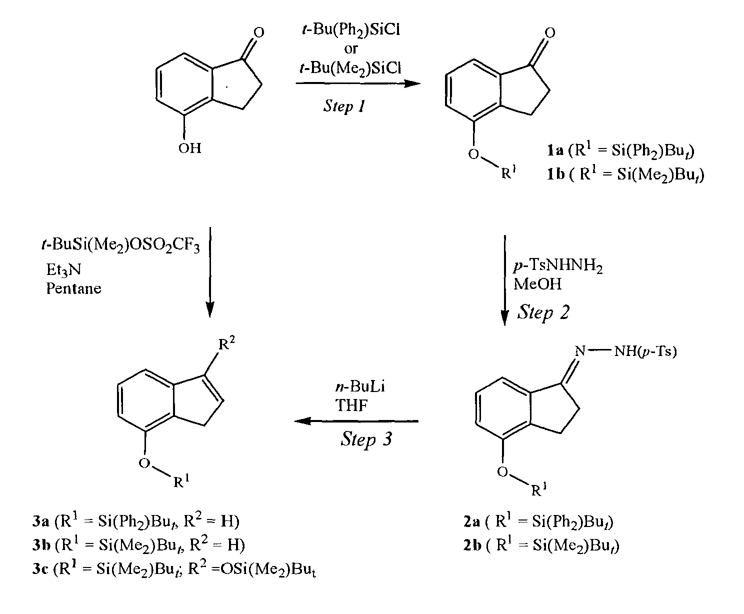

### Example 1:

### 1-1: Preparation of 4-(tert-butyldiphenylsiloxy)-1-indanone (compound 1a):

To a solution of 4-hydroxy-1-indanone (169 mmol) and imidazole (422 mmol) in dimethylformamide (DMF, 500 ml) was added 186 mmol tert-butyldiphenylchlorosilane. The reaction mixture was stirred overnight at room temperature and treated with 500 ml water and extracted with 500 ml diethyl ether. The organic phase was collected and dried over sodium sulphate. After evaporation and distillation under reduced pressure 150 mmol of compound (1a) was obtained.

1H NMR (270 MHz, CDCl₃) data for compound 1a (yield 89 %): d 6.95 (d, 2H), 6.6 (m, 9H), 6.2 (t, 1H), 5.9 (d, 1H), 2.4 (m, 2H), 1.9 (m, 2H), 0.4 (s, 9H); GC-MS (DB-5 30m 0.32 mm 0.25mm) retention time 27.5 min.

### 1-2: Preparation of 4-(tert-butyldiphenylsiloxy)-1-indanone tosylhydrazone (compound 2a):

To a solution containing 114 mmol of compound (1a) in 1000 ml methanol was added 114 mmol of p-toluenesulfonylhydrazide at room temperature. After stirring for three hours the solution was concentrated, which step was followed by crystallization at room temperature overnight. The crystalline compound (2a) (101 mmol) was isolated by filtration.

1H NMR (270 MHz, THF-d8) data for compound 2a (yield 89 %): d 9.1 (s, NH), 7.8 (m, 2H), 7.7 (m, 4H), 7.3 (m, 8H), 7.1 (d, 1H), 6.8 (t, 1H), 6.4 (d, 1 H), 3.1 (m, 2H), 2.9 (m, 2H), 2.3 (s, 3H, CH₃), 1.1 (s, 9H).

### 1-3: Preparation of 4-(tert-butyldiphenylsiloxy)-indene (compound 3a):

To a solution of 81 mmol of compound (2a) in 350 ml tetrahydrofurane (THF) at 0 °C was added dropwise 247 mmol n-butyllithium in 2.5 M hexane solution. After the addition the resulting solution was stirred at room temperature overnight. The solution was then treated with 400 ml ice water and washed twice with 300 ml solution of 5 % hydrochloric acid in water. The acidic solution was extracted three times with 250 ml diethyl ether, the organic fractions were combined and washed subsequently with aqueous sodium bicarbonate solution and brine, followed by drying over sodium sulphate. The solvents were removed by evaporation and the remaining oil was distilled under reduced pressure to give 70 mmol of compound 3 a.

1H NMR (270 MHz, CDCl₃) data for compound 3a (yield 86 %): d 7.8 (m, 3H), 7.4 (m, 7H), 7.2 (m, 1H), 7.0 (m, 1H), 6.8 (t, 1H), 6.5 (m, 1H), 6.4 (m, 1H), 3.5 & 3.40 (two broad triplet like signals of the two isomers, CH₂ each), 1.1 (s, 9H); GC-MS (DB-5 30m 0.32mm 0.25mm) retention time 23.5 min.

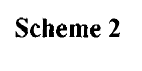

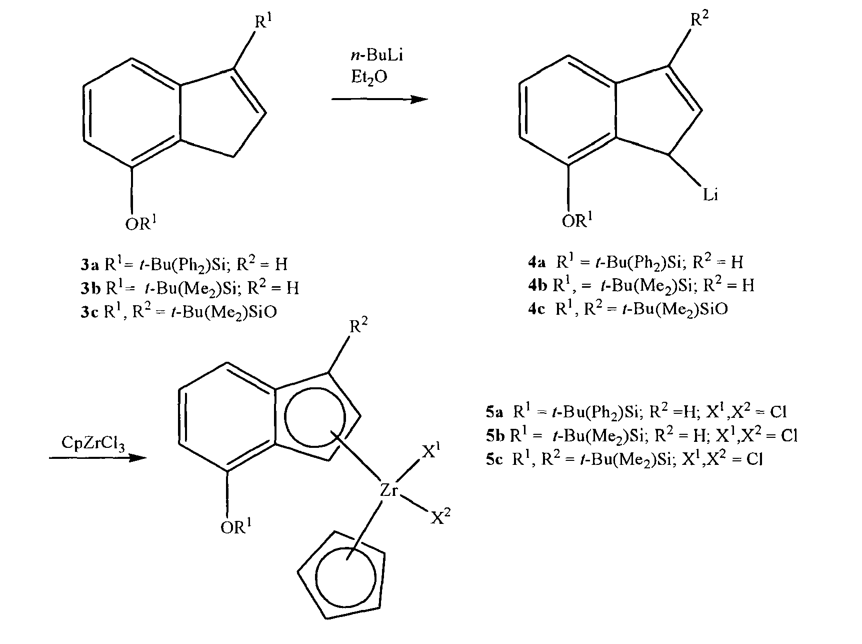

### 1-4: Preparation of Li salt 4a

Into a solution of the indene derivative 3 a (28.20 mmol) in dry diethyl ether (120 ml) was added dropwise n-BuLi (31.02 mmol) at 0°C under inert atmosphere. Upon complete addition, the mixture was stirred overnight at room temperature. Crude product was isolated by solvent removal, filtration and washing the formed Li salt precipitate with dry pentane.

1H NMR (270 MHz, THF-d8) data for compound 4a (yield 81 %): d 7.9 (m, 4H), 7.3 (m, 6H), 7.0 (d, 1 H), 6.5 (t, 1H), 6.3 (br, 1H), 6.1 (m, 1H), 6.0 (br, 1H), 5.7 (m, 1H), 1.1 (s, 9H).

### 1-5: Synthesis of metallocene 5a

CpZrCl₃ (1.66 mmol) was added as a solid into the mixture of Li salt 4a (1.66 mmol) in dry diethyl ether (20 ml) at -78°C. The mixture was stirred overnight at room temperature after which the solvent was removed and the residue extracted with pentane (3x). The pentane insoluble precipitate was suspended in toluene, filtrated and the filtrate dried in vacuum to afford 5a with the yield of 43 %.

1H NMR data (THF-d8) for 5a: d 7.9 (m, 2H), 7.7 (m, 2H), 7.3 (m, 8H), 6.90 (m, 1H), 6.5 (br, 3H), 6.3 (s, 5H), 1.3 (s, 9H); EI-MS: 597 (M+■).

### Example 2:

### 2-1: Preparation of 4-(tert-butyldimethylsiloxy)-1-indanone (compound 2a):

The procedure of step 1-1 described above was followed except that in place of tert-butyldiphenylchlorosilane used in step 1-1, tert-butyldimethylchlorosilane was used.

1H NMR (270 MHz, CDCl₃) data for compound 1b (quantitative yield): d 7.5 (1H, d), 7.4 (1H, t), 7.1 (1H, d), 3.0 (2H, m), 2.7 (2H, m), 1.1 (9H, s), 0.3 (6H, s); GC MS (in CH₂Cl₂, column DB-5 30 m 0.32 mm 0.25 µm) retention time 19 min.

### 2-2: Preparation of 4-(tert-butyldimethylsiloxy)-1-indanone tosylhydrazone (compound 2b):

The procedure of step 1-2 described above was followed except that in place of compound 1a produced in step 1-1, compound 1b produced in step 2-1 was used.

1H NMR (270 MHz, THF-d8) data for compound 2b (yield 97 %): d 9.1 (s, 1H, NH), 7.9 (d, 2H), 7.3 (m, 3H), 7.1 (t, 1H), 6.8 (d, 1H), 2.9 (m, 2H), 2.7 (m, 2H), 2.4 (s, 3H), 1.0 (s, 9H), 0.20 (s, 6H).

### 2-3: Preparation of 4-(tert-butyldimethylsiloxy)-indene (compound 3b):

The procedure of step 1-3 described above was followed except that in place of compound 2a produced in step 1-2, compound 2b produced in step 2-2 was used.

1H NMR (270 MHz, CDCl₃) data for compound 3b (yield 37 %): d 7.1 (m), 7.0 (m), 6.9 (m), 6.7 (m), 6.5 (m), 6.4 (m), 3.4 and 3.3 (CH ₂ of each isomer, two broad singlets), 1.0 (s, 9H), 0.2 (s, 6H); GC-MS (DB-5 30m 0.32mm 0.25mm) retention time 15.5 min.

### 2-4: Synthesis of metallocene 5b

The siloxyindene 3b (2.03 mmol) was dissolved in dry diethyl ether followed by addition of n-BuLi (2.03 mmol) at room temperature under Argon atmosphere. Stirring was continued for one hour after which CpZrCl₃ (2.03 mmol) was added as a solid followed by stirring overnight at ambient temperature. The isolation of crude product was done as described for 5a.

1H NMR data (THF-d8) for 5b: d 7.3 (d, 1H), 7.1 (m, 1H), 6.9 (t, 1H), 6.60 (m, 1H), 6.5 (s, 5H), 6.3 (br s, 2H), 1.10 (s, 9H), 0.3 (d, 6H); EI -MS: 472 (M+■).

### Example 3:

### 3-1: Preparation of 1,4-bis(tert-butyldimethylsiloxy)-indene (compound 3c):

The disiloxysubstituted indene 3c (Scheme 1) was prepared from 4-hydroxy-1-indanone in a one pot procedure. Into the mixture of 4-hydroxyindanone (33.7 mmol) in pentane (100 ml) was added t-butyldimethylsilyltrifluoromethylsulfonate (67.5 mmol) at room temperature followed by an addition of triethylamine (67.5 mmol). Upon addition of THF (≈30 ml) to the reaction mixture formation of two-phase liquid-liquid system occurred. Stirring was continued until almost all solid material disappeared. The supernatant pentane fraction was transferred to another flask and the oily layer was washed with pentane. Indene 3c (86 % yield) was obtained from the combined pentane fractions via crystallisation.

1H NMR (270 MHz, THF-d8) data for compound 3c (yield 86 %) d 7.2 (m, 1H, 5-H), 7.0 (d, 1H, 6-H), 6.7 (d, 1H, 4 -H), 5.4 (m, 1H, 2-H), 3.2 (m, 2H, 1-H), 1.0-1.1 (m, 18H, 2 x t-Bu), 0.3 (s, 6H, SiMe), 0.2 (s, 6H, SiMe); anal. calculated for C₂₁H₃₆O₂Si₂: C, 66.96; H, 9.63; Si, 14.91%, found: C, 66.78; H, 9.75; Si, 14.78%.

### 3-2: Synthesis of metallocene 5c

Into the solution of compound 3c (5.91 mmol) in 90 ml of dry diethyl ether was added n-BuLi (6.15 mmol) at -5°C. The mixture was stirred overnight at room temperature after which it was cooled to -78°C, and CpZrCl₃ (5.91 mmol) was added as a solid into it. After overnight stirring at room temperature, the solvent was removed and the residue extracted with pentane (2x 50 ml). The pentane insoluble fraction was suspended in toluene, stirred for couple of minutes and then filtrated. The filtrate was dried in vacuum to afford 0.96 g of 5c (27 % yield).

1H NMR data (THF-d8) for 6c: d 7.1 (m, 2H), 6.6 (m, 1H), 6.2 (s, 5H), 6.1 (m, 2H), 1.1 (d, 18), 0.3 (four partly overlapping singlets, 12H); EI-MS: 603 (M+■).

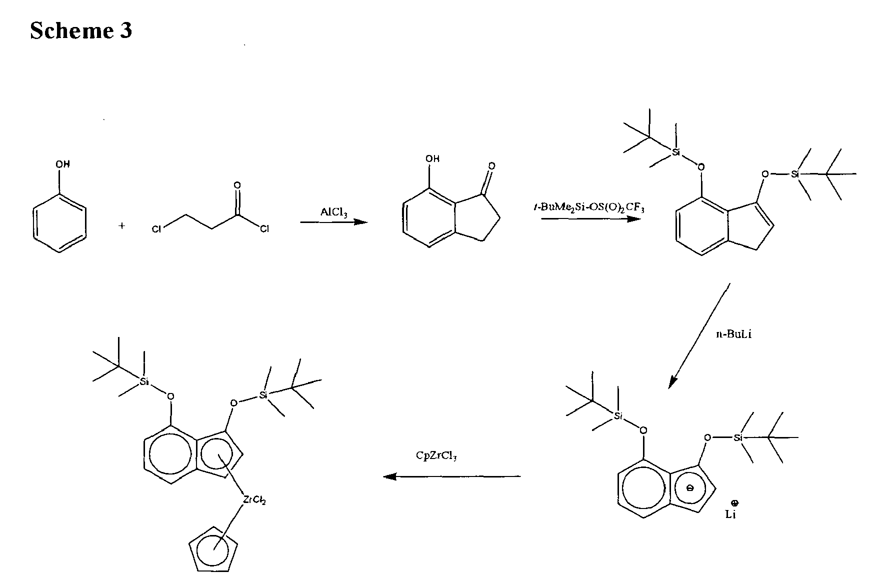

### Example 4:

### 4-1: Synthesis of 7-hydroxyindan-1-one

The 7-hydroxyindan-1-one was prepared from the Fries rearrangement reaction of the in-situ-prepared reaction product between phenol and 3-chloropropionyl chloride.

Thus, a solution of phenol (3.40g, 36.1 mmol) and 3-chloropropionyl chloride (3.45 ml, 36.1 mmol) was heated at 90°C under Argon atmosphere for 2.5 hours. To the light yellow oil thus formed was cautiously added aluminium chloride (21.7g, 162.58mmol) at room temperature, and the reaction mixture was further heated at 100°C for 1 hour and 160°C for 2 hours. The product was cooled down to 0°C, treated with diluted aqueous HCl solution, and extracted with dichloromethane. The residue was purified by chromatography on silica gel using heptane/ethyl acetate (5/1 v/v) as eluent, to afford pure 7-hydroxyindan-1-one as a white solid (2.16 g, yield=40%).

1H NMR (270MHz, CDCl₃) d 9.06 (s, 1H, -OH), 7.46 (m, 1H, CHAr), 6.93 (dd, 1H, CHAr), 6.75 (dd, 1H, CHAr), 3.11 (m, 2H, -CH₂ -), 2.71 (m, 2H, -CH₂-).

### 4-2: Synthesis of 3,4-bis-(tert-butyldimethylsiloxy)-1H-indene

Under argon atmosphere, a mixture of 7-hydroxyindan-1-one (2.00 g, 13.5 mmol) prepared in step 4-1 and triethylamine (5.7 ml, 40.5 mmol) in CH₂Cl₂ (100 ml) was treated with a solution of tert-butyldimethylsilyl trifluoromethanesulfonate (7.75 ml, 33.7 mmol) in 20 ml of CH₂Cl₂ at room temperature. The reaction mixture was stirred for 3 days. Upon completion of the reaction, the mixture was concentrated under reduced pressure, and the residue was purified by chromatography on silica gel using heptane/ethyl acetate/triethylamine (10/1/0.25 v/v/v) as eluent, to afford pure 3,4-bis-(tert-butyldimethylsilanyloxy)-1H-indene as a white solid (4.0 g, yield=79%).

1H NMR (270MHz, CDCl₃) d 7.02 (t, 1H, CHAr), 6.95 (d, 1H, CHAr), 6.71 (d, 1H, CHAr), 5.29 (t, 1H, CHVinyl), 3.18 (d, 2H, -CH₂-), 0.97 (br s, 18H, tert-butyl), 0.27 (s, 6H, -CH₃), 0.24 (s, 6H, -CH₃).

### 4-3: Synthesis of the lithium salt of 3,4-bis-(tert-butyldimethylsiloxy)-1H-indene

Under Argon atmosphere n-butyllithium was added dropwise at -20 °C to a solution of 3,4-bis-(tert-butyldimethylsiloxy)-1H-indene prepared in step 4-2 in 60 ml of THF. The dark red mixture was then stirred 2 hours at that temperature and overnight at room temperature. The next day, the reaction mixture was concentrated under reduced pressure and the residue was suspended in pentane (20 ml) and filtered. The precipitate was further washed with pentane (3x20 ml) and dried in vacuo to afford a beige powder identified as the desired product (2.47 g, yield=82%).

1H NMR (270MHz, THF-d8) d 6.73 (d, 1H, CHBenz.) 6.13 (t, 1H, CHBenz.), 5.89 (d, 1H, CHCp), 5.36 (d, 1H, CHCp), 1.03 (s, 9H, tert-butyl), 0.92 (s, 9H, tert -butyl), 0.23 (s, 6H, -CH₃), 0,17 (s, 6H, -CH₃).

### 4-4: Synthesis of [(1,7-bis(tert-butyldimethylsiloxy)indenyl)cyclopentadienyl]zirconium dichloride

Under argon atmosphere, cyclopentadienyl zirconium trichloride (344 mg, 1.31 mmol) was added portionwise at 0 °C to a solution of the lithium salt of 3,4-bis-(tert-butyldimethylsiloxy)-1H-indene (500 mg, 1.31 mmol) prepared in step 4-3 in dry diethyl ether (10 ml). The reaction mixture was stirred one hour at 0 °C and one hour at room temperature, and then filtered. The pr ecipitate was extracted with 10 ml of dry diethyl ether and dried under vacuum. Recrystallization of the reddish residue in toluene at +4 °C gave sharp needle-like orange crystals identified as the desired product (yield=0.270 g, 34.3%).

1H NMR (400MHz, CDCl₃) d 6.99 (m, 2H), 6.35 (dd, 1H), 6.22 (s, 5H, Cp), 5.97 (d, 1H), 5.89 (d, 1H), 1.05 (s, 9H, tert-butyl), 0.97 (s, 9H, tert -butyl), 0.36 (s, 3H, - CH₃), 0.35 (s, 6H, -CH₃), 0.31 (s, 3H, -CH₃). 13C NMR (100MHz, CDCl₃) d 152.76, 145.10, 127.10, 127.0, 117.1, 116.6, 110.00, 109.47, 105.65, 91.71, 26.34, 26.10, 18.89, 18.82, -3.33, -3.46, -3.91.

### Comparative Example 1:

Bis(1,4-bis(tert-butyldimethylsiloxy)indenyl)zirconium dichloride was prepared from 1,4-bis(tert-butyldimethylsiloxy)-indene of Example 3-1 as shown in Scheme 4 of WO 03/000744.

### Comparative Example 2:

By using the compound prepared in Example 2-3 as the starting material, bis(4-tert-butyldimethylsiloxyindenyl)zirconium dichloride was prepared as shown in Scheme 4 of WO 03/000744.

### Comparative Example 3:

By using the compound prepared in Example 4-2 as the starting material, bis(bis(1,7-tert-butyldimethylsiloxyindenyl))zirconium dichloride was prepared as shown in Scheme 4 of WO 03/000744.

### Example 5:

### Polymerization:

Ethylene used was grade 3.5 (AGA), iso-Butane 4.5 (Messer-Griesheim), 1-hexene 1.8 (AMOCO Corp.), hydrogen 5.0 (AGA), nitrogen 5.0 (AGA). In addition, all raw materials were passed through series of columns removing oxygen, water, carbon monoxide and carbon dioxide and other trace impurities.

Polymerization temperature was 80°C and ethylene pressure 10 bar unless otherwise noted. Methylalumoxane (MAO) 30 wt-% solution in toluene was purchased from Albemarle.

The catalyst was prepared as follows: 0.25 mmol of the metallocene compound prepared in Example 3 (((1,4-bis(tertbutyldimethylsiloxy)indenyl) cyclopentadienyl) zirconium dichloride) was mixed with 0.25 mmol of MAO in pentane solution (600 mL) in the catalyst feeding funnel. The catalyst solution was then charged into the reactor as described below.

Copolymerisation of ethylene with 1-hexene was carried out in a 2 L stainless steel autoclave reactor equipped with a paddle stirrer and a continuous supply of ethylene. 600 mL of pentane was added to the reactor at room temperature, followed by the addition of the catalyst from a catalyst feeding funnel with additional 600 mL of pentane. The reactor was heated to +80°C, after which the polymerisation was started at that temperature by adding 30 mL of 1-hexene in one batch. At the same time the ethylene feed into the reactor was started. Ethylene was introduced continuously into the reactor to maintain a constant pressure of 13.7 bar within the reactor (corresponding to a partial pressure of ethylene of 10 bar). After 30 minutes the reaction was terminated by releasing the pressure and venting the reactor contents. The solvent was evaporated in a fume hood and the polymer was dried and analyzed. The data can be found in Table 1.

### Example 6:

The procedure of Example 5 was repeated except that the metallocene compound prepared in Example 1 (((4-tbutyldiphenylsiloxyindenyl)cyclopentadienyl)zirconium dichloride) was used as a catalyst.

### Example 7:

The procedure of Example 5 was repeated except that the metallocene compound prepared in Example 4 (((1,7-bis(tertbutyldimethylsiloxy)indenyl)cyclopentadienyl) zirconium dichloride) was used as a catalyst.

### Comparative Example 4:

The procedure of Example 5 was repeated except that the metallocene compound prepared in Comparative Example 1 was used as a catalyst.

### Comparative Example 5:

The procedure of Example 5 was repeated except that the metallocene compound prepared in Comparative Example 2 was used as a catalyst.

### Comparative Example 6:

The procedure of Example 5 was repeated except that the metallocene compound prepared in Comparative Example 3 was used as a catalyst.

### Comparative Example 7:

The procedure of Example 5 was repeated except that (1,4-(bisphenyl)indenyl)cyclopentadienylzirconium dichloride was used as the metallocene compound in place of the compound prepared in Example 3.

### Comparative Example 8:

The procedure of Example 5 was repeated except that (4-phenylindenyl)cyclopentadienylzirconium dichloride was used as the metallocene compound in place of the compound prepared in Example 3.

### Example 8:

### Catalyst Formation

A solution containing 0.3 mmol of metallocene compound prepared in Example 3 and an amount of MAO corresponding to 60 mmol aluminium in 15 ml toluene was prepared. The solution was added slowly onto 10 grams of 20 micron Sylopol silica carrier supplied by Grace, which had been treated at 600 °C for six hours under nitrogen flow to remove the hydroxyl groups from the silica support. The thus obtained supported catalyst was dried in nitrogen atmosphere at 50 °C for three hours.

### Example 9:

The procedure of Example 8 was repeated except that the metallocene compound produced in Example 1 was used in place of the compound of Example 3.

### Example 10:

The procedure of Example 8 was repeated except that the metallocene compound produced in Example 4 was used in place of the metallocene compound of Example 3.

### Comparative Example 9:

The procedure of Example 8 was repeated except that the metallocene compound produced in Comparative Example 2 was used in place of the metallocene compound of Example 3.

### Comparative Example 10:

The procedure of Example 8 was repeated except that the metallocene compound produced in Comparative Example 3 was used in place of the metallocene compound of Example 3.

### Comparative Example 11:

The procedure of Example 8 was repeated except that the same metallocene compound that was used in Comparative Example 7 was used in place of the metallocene compound of Example 3.

### Comparative Example 12:

The procedure of Example 8 was repeated except that the same metallocene compound that was used in Comparative Example 8 was used in place of the metallocene compound of Example 3.

### Example 11:

### Polymerisation

The catalyst was prepared as follows: 203.8 mg of the supported metallocene catalyst prepared in Example 8 was suspended in isobutane solution (600 mL) in the catalyst feeding funnel. The catalyst slurry was then charged into the reactor as described below. The molar ratio of aluminium to zirconium in the catalyst was 200.

Copolymerisation of ethylene and 1-hexene was carried out in a 2 L stainless steel autoclave reactor equipped with a paddle stirrer and a continuous supply of ethylene. 600 mL of isobutane was added to the reactor at room temperature, followed by the addition of the catalyst from a catalyst feeding funnel with additional 600 mL of isobutane. The reactor was heated to +80°C, after which the polymerisation was started at that temperature by adding 30 mL of 1-hexene in one batch. At the same time the ethylene feed into the reactor was started. Ethylene was introduced continuously into the reactor to maintain a constant pressure of 14.1 bar within the reactor (corresponding to a partial pressure of ethylene of 5 bar). After 60 minutes the reaction was terminated by releasing the pressure and venting the reactor contents. The solvent was evaporated in a fume hood and the polymer was dried and analyzed. The data can be found in Table 2.

### Example 12:

The procedure of Example 11 was repeated except that 205.5 mg of the supported metallocene catalyst prepared in Example 9 was used as the catalyst in place of the catalyst of Example 8.

### Example 13:

The procedure of Example 11 was repeated except that 199.2 mg of the metallocene catalyst prepared in Example 10 was used as the catalyst in place of the catalyst of Example 8.

### Comparative Example 13:

The procedure of Example 11 was repeated except that 189.2 mg of the metallocene catalyst prepared in Comparative Example 9 was used as the catalyst in place of the catalyst of Example 8.

### Comparative Example 14:

The procedure of Example 11 was repeated except that 198.3 mg of the metallocene catalyst prepared in Comparative Example 10 was used as the catalyst in place of the catalyst of Example 8.

### Comparative Example 15:

The procedure of Example 11 was repeated except that 184.0 mg of the metallocene catalyst prepared in Comparative Example 11 was used as the catalyst in place of the catalyst of Example 8.

### Comparative Example 16:

The procedure of Example 11 was repeated except that 201.0 mg of the metallocene catalyst prepared in Comparative Example 12 was used as the catalyst in place of the catalyst of Example 8.

The data in Tables 1 and 2 shows that the present compounds are able to produce in ethylene copolymerization a polymer with a high molecular weight both in homogeneous and heterogeneous polymerization.

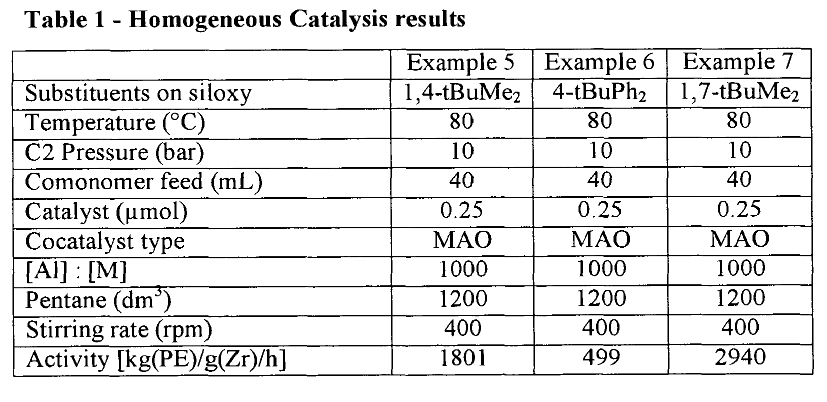

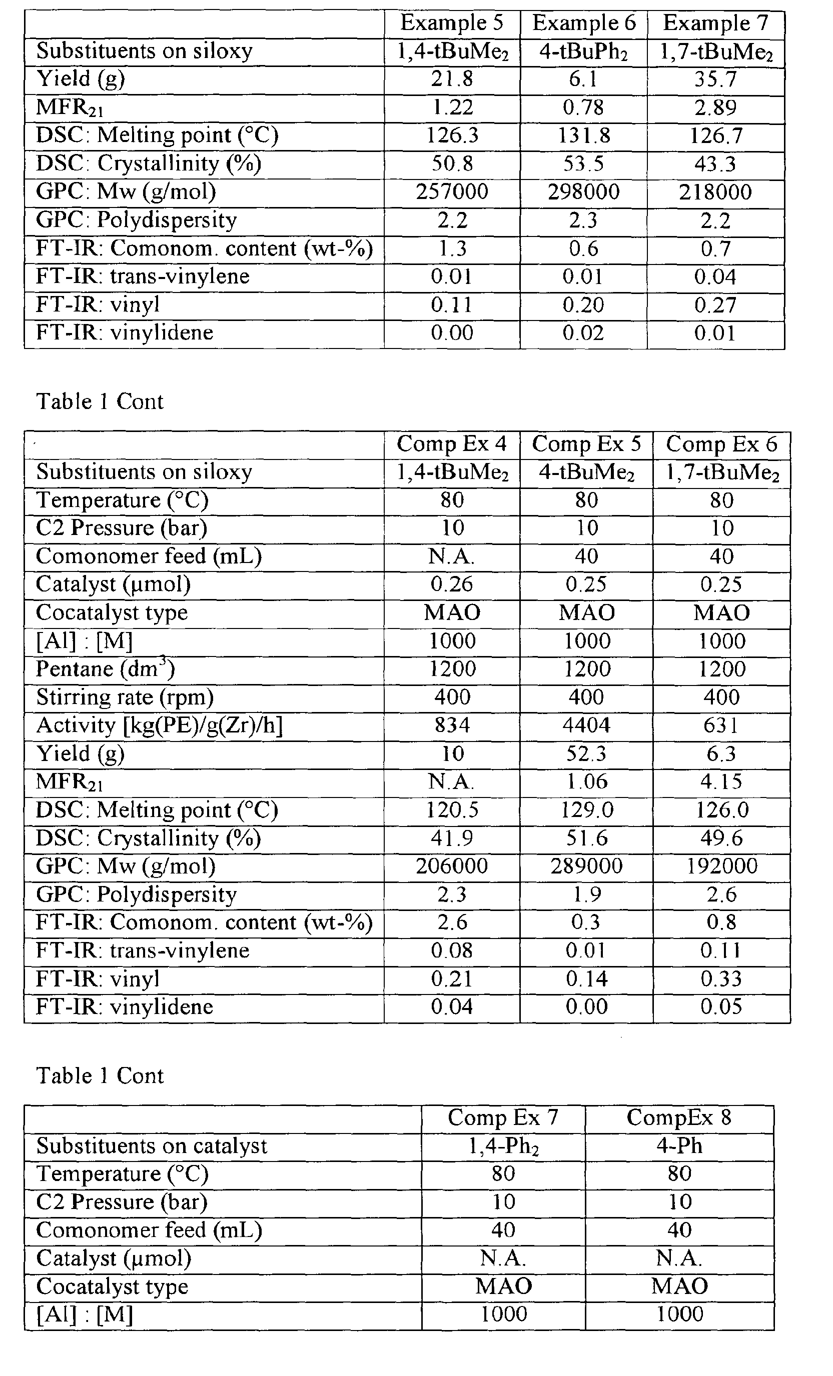

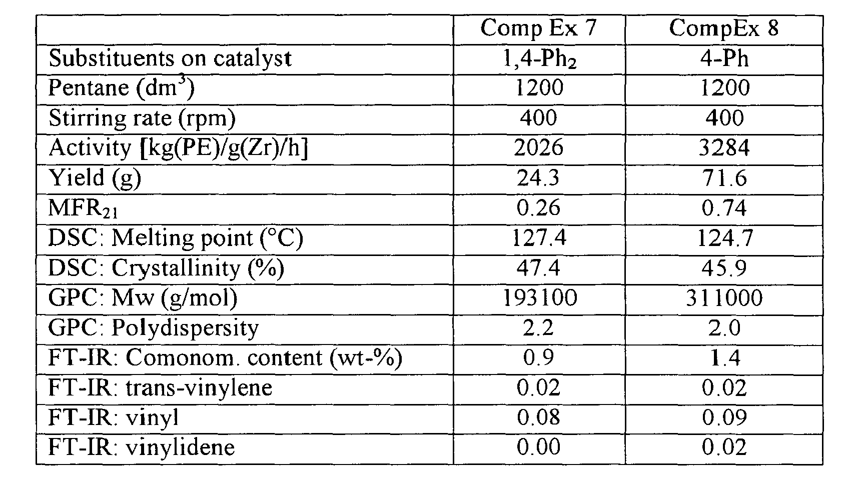

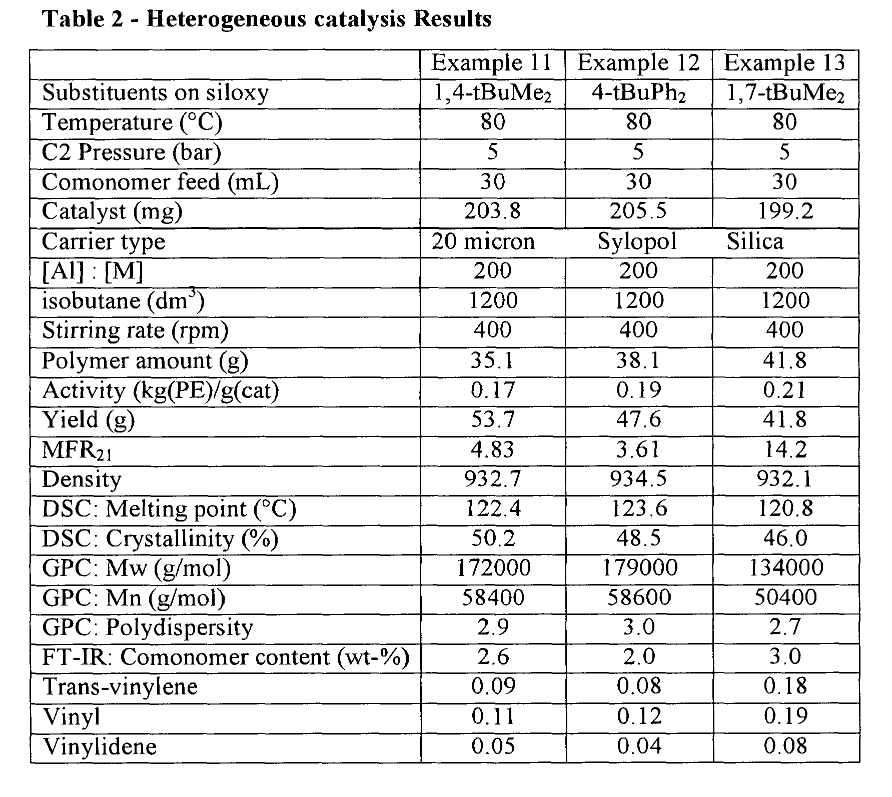

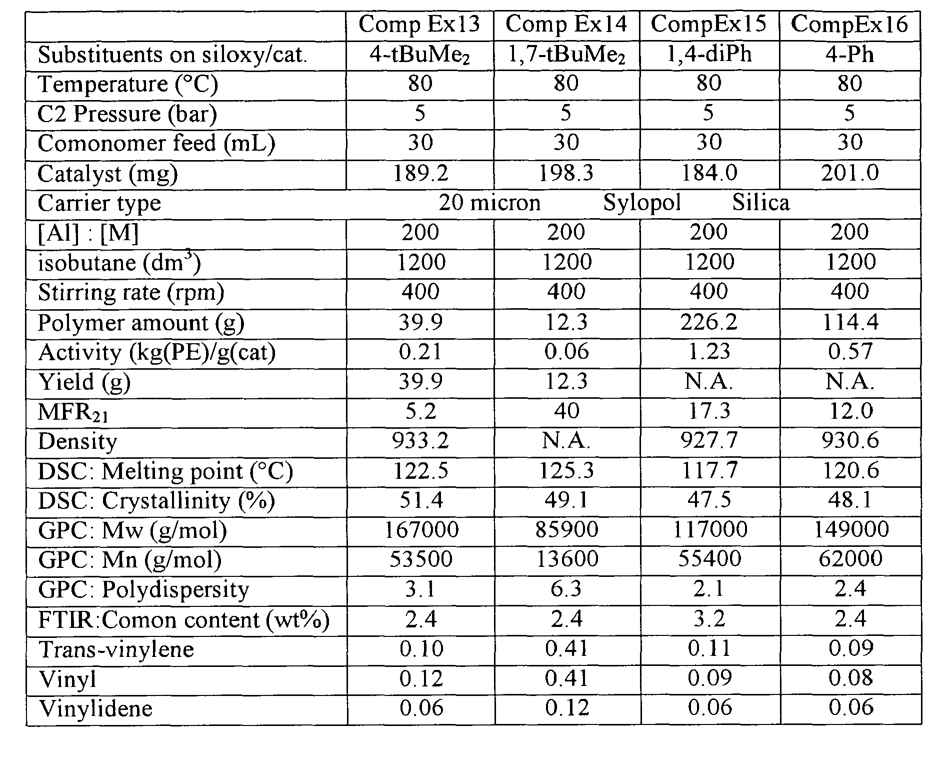

## Claims

1. A metallocene procatalyst compound of formula (I) 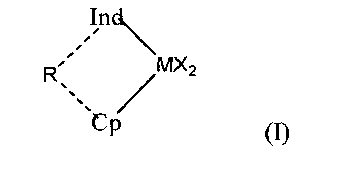 (wherein Ind represents a multi-ring η⁵-ligand substituted by a siloxy group;
Cp is a substituted or unsubstituted cyclopentadienyl group;
M is a group 3 to 7 transition metal;
X is a sigma ligand; and
R is an optionally present bridge between the Ind and Cp ligands.

2. The procatalyst of claim 1 having the formula (II) 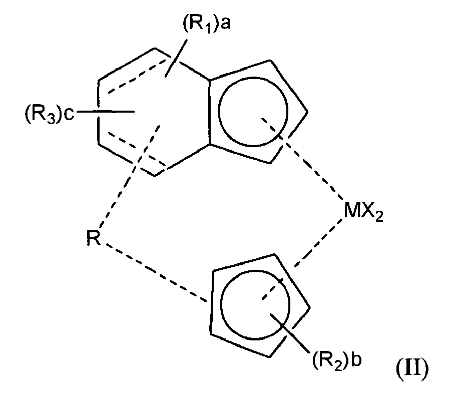 wherein M, X and R are as hereinbefore defined;
each R₁, which may be the same or different, is a ring substituent which does not form a bond to a metal M or two R₁ groups present on adjacent carbon atoms on the five membered ring can be taken together to form a further optionally substituted ring;
each R₂, which may be the same or different, is a ring substituent which does not form a bond to a metal M;
each R₃, which may be the same or different, is a siloxy group;
a is an integer from 0 to 6,
b is an integer from 0 to 5; and
c is an integer from 1 to 7 the total of a and c not exceeding 7.

3. A procatalyst as claimed in claim 2 wherein R₃ is a siloxy group of formula -OSi(R₄)₃ wherein each R₄, which may be the same or different, is a C₁₋₁₆ hydrocarbyl group.

4. A procatalyst as claimed in claim 3 wherein each R₄ is a C₁₋₆ alkyl group, C₂₋₈-alkenyl, C₆₋₁₀-aryl groups or C₇₋₁₂-aralkyl groups such as benzyl.

5. A procatalyst as claimed in claim 4 wherein each R₄ is methyl, ethyl, isopropyl, tertbutyl, octenyl, phenyl or benzyl.

6. A procatalyst as claimed in claim 2 to 5 wherein c is 1 or 2.

7. A procatalyst as claimed in claim 1 to 6 wherein said siloxy substituent is present on the 1, 4 or 7 position of the ring.

8. A procatalyst as claimed in claim 1 to 7 wherein the multiring structure is indenyl.

9. A procatalyst as claimed in claim 1 to 8 wherein no bridge is present.

10. A procatalyst as claimed in claim 1 to 9 wherein each X is a halogen, C₁₋₁₂₋alkyl, benzyl, amino or trialkylsilyl group.

11. A procatalyst as claimed in claim 1 to 10 wherein M is Ti, Zr, Hf or Cr.

12. A procatalyst as claimed in claim 2 to 11 wherein each R₁ is a C₁₋₈ hydrocarbyl group or a triC₁₋₈-alkylsilyl group.

13. A procatalyst as claimed in claim 2 to 11 wherein a is 0.

14. A procatalyst as claimed in claim 2 to 13 wherein each R₂ is a C₁₋₈ hydrocarbyl group, a triC₁₋₈-alkylsilyl group or a siloxy group R₃.

15. A procatalyst as claimed in claim 2 to 14 wherein b is 0.

16. A procatalyst as claimed in claim 1 to 15 being of formula (III) 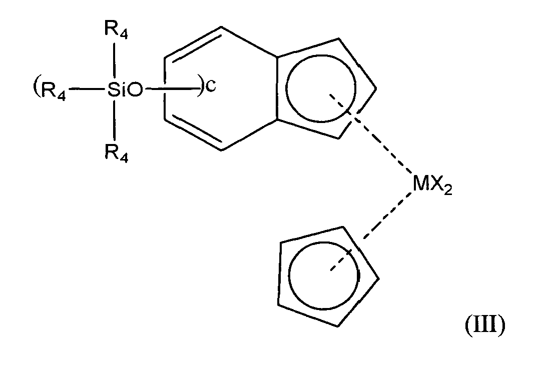 (wherein R₄, c, M and X are as hereinbefore defined).

17. A procatalyst as claimed in claim 1 to 16 wherein the multiring ligand is 1,7-bis(tertbutyldimethylsiloxy)indenyl, 1,4-bis(tertbutyldimethylsiloxy)indenyl, 1-tertbutyldimethylsiloxy)indenyl, 4-bis(tertbutyldimethylsiloxy)indenyl, 1,7-bis(tertbutyldiphenylsiloxy)indenyl, 1,4-bis(tertbutyldiphenylsiloxy)indenyl, 1-tertbutyldiphenylsiloxy)indenyl, and 4-bis(tertbutyldiphenylsiloxy)indenyl.

18. An olefin polymerisation catalyst system comprising (i) a metallocene procatalyst compound as claimed in any one of claim 1 to 17 and (ii) a co-catalyst.

19. A process for olefin polymerisation comprising polymerising an olefin in the presence of olefin polymerisation catalyst system as claimed in any one of claim 1 to 17.

20. Use of a metallocene procatalyst compound as claimed in any one of claim 1 to 17 in olefin polymerization, especially ethylene or propylene, more especially ethylene, polymerisation or copolymerisation.

21. An olefin polymer produced by a polymerisation catalysed by an olefin polymerisation catalyst system as claimed in any one of claim 1 to 17.

22. A process for the preparation of a siloxy substituted compound comprising reacting a compound of formula (IV) 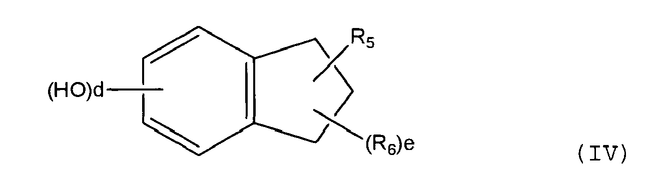 (wherein R₅ is an oxo group present in the 5 -membered ring, R₆ is a ring substituent as defined for R₁ above;
d is 0 to 5,
e is 0 to 6, the total of d and e not exceeding 6, with the proviso that an OH group is not adjacent R₅)
with a non-nucleophilic base and a compound (R₄)₃Si-Y, (wherein R₄, which may be the same or different, is a C₁₋₁₆ hydrocarbyl group and Y is a leaving group) in a non-polar solvent;
adding a more polar solvent to the mixture so as to form a two -phase mixture, said more polar solvent being free of active protons;
and isolating the siloxy substituted compound from the non-polar solvent fraction.

23. A process as claimed in claim 22 wherein the non-polar solvent is an alkane and the more polar solvent is an ether.
